# EUROPEAN PATENT APPLICATION

(11) **EP 1 656 976 A2**
(43) Date of publication of application: **17.05.2006**
(21) Application number: 05256925.8
(22) Date of filing: 09.11.2005
(51) Int. Cl.: A63F 13/12

(54) **Network game system**

(30) Priority: 10.11.2004 JP 2004325895
(71) Applicant: Kabushiki Kaisha Sega doing business as Sega Corporation, Tokyo 144-8531 (JP)
(72) Inventor: Kasai, Kazuyoshi K.K. Sega d.b.a. Sega Corporation, Tokyo 144-8531 (JP)
(74) Representative: Brown, Kenneth Richard

(57) **Abstract**

In a network game in which a plurality of game terminal devices are connected via a server, a RPG game is played by a team formed by game program characters operated by the respective game terminals, If there is a player at a game terminal who wishes to depart from the team, then the operating authority for that player's character are delegated to a player at another game terminal device. If the departed player returns to the game, the variable parameter values for the character are set to the variable parameter values at the time of departure,

## Description

### CROSS-REFERENCES

This application claims priority from the Japanese Patent Application No. 2004-325895, filed on November 10, 2004, the entire disclosure of which is herein incorporated by reference.

### BACKGROUND

The present invention relates to a network game system.

As a network game system of this type, there exists a system as described in Japanese Patent Application Publication No. 2002-239251. In this system, a plurality of game devices are connected to a game master station via a communications network, and a communicative game application is implemented among the respective game devices via the game master station. Furthermore, each of the game devices is provided with a personal information processing device capable of exchanging personal information between players when a communicative game application is implemented among the game devices.

There are network game systems In which a plurality of players form a team and play a game following a game scenario. More specifically, respective game characters controlled by the game terminals devices operated by the respective players, and thus under the control of the players, form a team, and a place is provided on a network where the players can play a game via the network, regardless of the fact that the players are physically separated from each other. For example, they indude a Mahjong game and team sports games, as well as a genre know as a network RPG ("role playing games").

In the field of network RPG, a plurality of players participate in a game created on a network, in accordance with common rules (which are determined by a game program), via game terminal devices which are operated respectively by the players. Game characters corresponding to the respective players are defined or established in a common place, namely, a common game space (virtual space), the game characters form a team, and as they carry out their respective roles, the world or environment defined in the game space is developed In accordance with the scenario determined by the game program. The game characters are operated by the players via game terminal devices, and the players form a team by means of the game characters and pursue a particular scenario in accordance with the game program. During the course of the game scenario, there may be a fight scene, for example, in which the team of game characters perform actions, such as working together to defeat an enemy, or the like.

When a player wishes to take part in this network game system, that player connects to a game server, also known as a game master station, which is connected to the player's game terminal device via a network, enters into a "lobby", namely, a virtual entry point in the network, and then solicit other players to form a team. When the number of players forming the team has reached a permitted value, then the game server allows the team to start a game. As an example of the prior art relating to the present invention, there is the video game device described in Japanese Patent Application Publication No. 2001-007425, for instance.

### SUMMARY

In a network game system of this kind, since the game involves team play, if a player belonging to the team departs from the team during the playing of a game, a problem arises in that the other players will not be able to continue playing the game or are left in an extremely disadvantageous situation. In a match-up game, such as a Mahjong game, a game can be continued even if an opposing player is replaced by a CPU, but in the case of cooperative playing, such as an RPG, the results achieved by the whole team are important, and therefore it is not adequate for a proxy character to be controlled automatically by the CPU of the game server or of the game terminal device.

Therefore, in a conventional network game system, either a player is not permitted to depart from a team, or the playing of a game is ended compulsorily when a player departs from the team,

However, there may be cases where a player cannot avoid departing during the playing of a game, and if players are absolutely forbidden from leaving a team, then a problem occurs in that players will be dissuaded from taking part in a team game, and the like.

On the other hand, it may be possible to delegate the authority to operate the game character of a player departing from the team to another of the players forming the team, but one can expect that adopting this approach would cause drawbacks in that this may actually encourage players to leave the team, since the operational burden on the departed player is reduced while the game character continues to grow without any effort from the departed player.

Therefore, it is an object of the present invention to provide a novel system for a network game system in which temporary departure of a player is permitted, while at the same time departure will not be lightly done and the departed player is not dissuaded from returning to the network game system.

In order to achieve the aforementioned object, in the present invention, when a player departs temporarily from a network game system, the processing device of a server of a network system, or of a game terminal device connected to this server, stores the current variable parameter values relating to the character under the control of that player, in a memory, and delegates the operating authority for the character to the operating terminal of another player, and when the operating authority for the character is returned to the temporarily departed player, the processing device establishes the variable parameter values copied at the time of departure, as the parameter values for the returning character.

By adopting a setup of this kind, then even if the operating authority for a character are delegated to another player, and the delegated character is operated skillfully by that other player so as to improve the ability values for that character, which preferably are parameters that change according to the course of the game, such as the physical strength, magical powers, attacking strength, defensive strength, and the like, established for the character, then when the operating authority of the character are returned to the player who originated the delegation, the character is set compulsorily to the original parameter values. Therefore, the player will not be concerned that the parameter values of the character he or she left will have declined, and hence returning to the game would be made easier for a departed player. Consequently, the present invention permits temporary departure of a player during an electronic game in which a plurality of players form a team by using a network game system, while at the same time it does not allow players to depart without due consideration, and avoids dissuading a departed player from returning to the network game system.

### DESCRIPTION OF DRAWINGS

Fig. 1 is a system diagram of a game system relating to an embodiment of the present invention;
Fig. 2 is a functional block diagram of a network game system relating to an embodiment of the present invention;
Fig. 3 is a functional block diagram for describing a configuration of a game terminal device,
Fig. 4a shows a game screen displayed on the monitor of the respective game terminals, and Fig. 4b is a conceptual diagram showing a situation in which characters are disposed on a ground surface in a virtual space, as observed from a virtual viewpoint;
Fig. 5 is a flowchart showing the operations of an embodiment of the present invention; and
Fig. 6 is a block diagram showing the relationship between a game terminal device and a game application server.

### DETAILED DESCRIPTION

Next, an embodiment of the present invention is described with reference to the accompanying drawings. The following description relates to the example of a network RPG game, and a game system in which a plurality of players seek to achieve a common objective by controlling their respectively corresponding game characters, in a common virtual game space created on a network.

Ability values (variable parameter values) for the game characters are updated and stored in a memory of the corresponding game terminal, or a memory of the server, in accordance with points gained by defeating enernles, or the like, during the course of development of the game scenario.

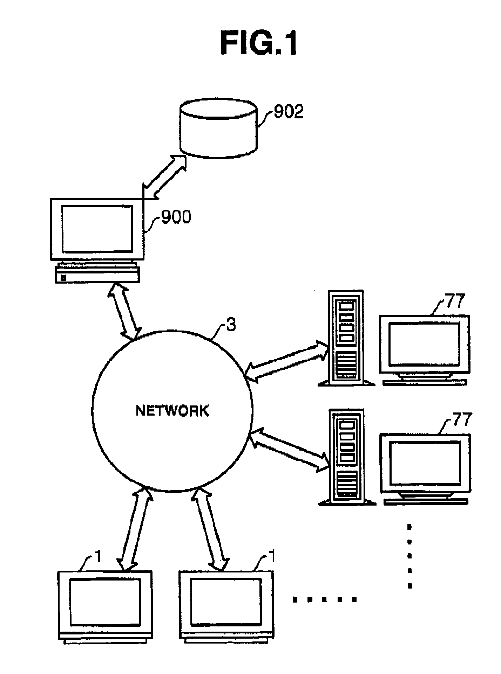

A system configuration for accessing a game server 77 from a particular game device 1 is described here with reference to Fig. 1. In this case, firstly, an initial registration process is required for the particular game device 1. After initial registration, it is judged whether or not access to a game server 77 connected to the network game system is permitted or denied. Game devices 1 and game servers 77 are connected to the network 3. A network game is implemented by coordinated operation of the game devices 1 and a game server 77, by means of the game devices 1 accessing the game server 77. The game server 77 carries out data processing for forming game screens such as: determining the positions and behavior of game characters, and parameter values; judging contact between the game characters and the background; and determining the position and direction of the viewpoint, on the basis of control information and a game program supplied from the game device 1, and data required for executing the game program. The results of this processing are supplied to the game devices 1 connected to the game server 77. The game devices 1 perform required image processing on the basis of the processed data and the game program. The resulting images are displayed on monitors connected to the game devices 1.

An authentication server 900 is connected to the network 3. This authentication server 900 Is a common authentication server 900 for the plurality of game servers 77. Information on the game devices 1 relating respectively to the plurality of game servers 77 is registered in a database 902 of the authentication server 900.

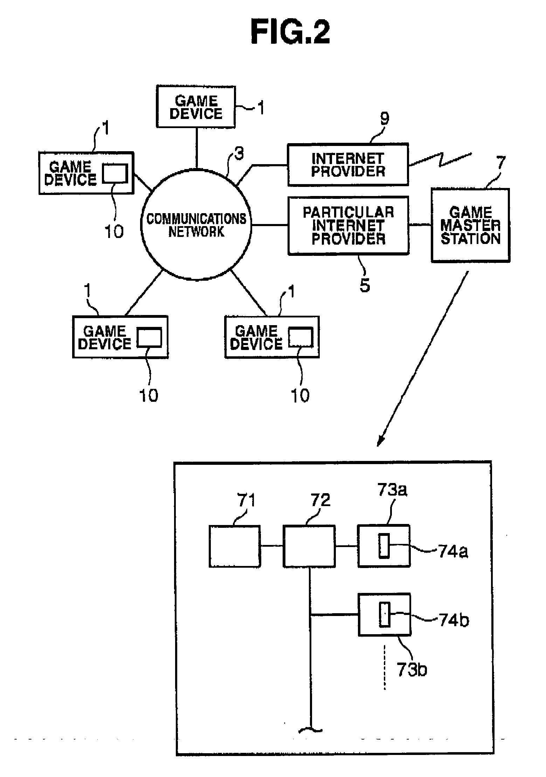

Fig. 2 is a functional block diagram of a network game system relating to an embodiment of the present invention. In this system, a common game application program is implemented between respective game devices. The system comprises a plurality of terminal devices 1 which are video game machines, a game master station 7 including one or a plurality of game servers, and a communications network 3 for connecting the game devices with the game master station. The terminal device may include, for example, a home game console, a commercial game machine, a PC, or a portable terminal, such as a cellular telephone.

In this system, a terminal device is connected to a game master station 7 via a designated Internet provider 5 in order to implement a particular game, and a common game program is executed among the respective game devices (terminal devices) 1, 1 via the game master station 7. The communications network may also include a LAN, Ethernet (registered trademark), or the like.

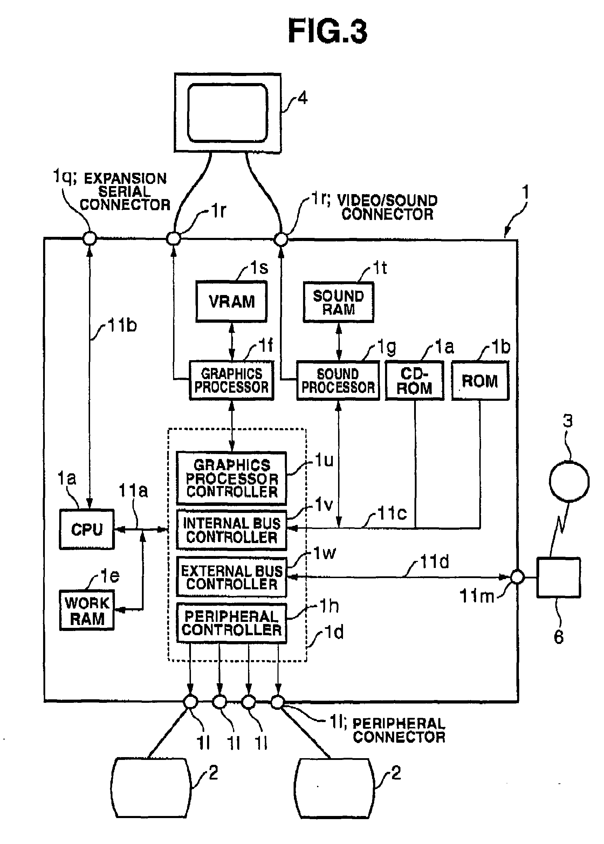

Fig. 3 is a functional block diagram for describing the configuration of the terminal device. The game device 1 comprises: a CPU 1 a forming a processing device for executing a game program and other control programs; a ROM 1 b for storing data, an operating system, and the like, required in order to process the game program; a memory device 1 c including a storage medium, such as a CD-ROM, DVD-ROM, hard disk, memory card, or the like, for storing a data group consisting of graphics, such as animated images, text and other information, and a game application program which implements a particular game on the basis of the data group; a bus controller 1 d for controlling data transfer between the CPU 1 a and the various sections of the device: a RAM 1e for holding programs for the CPU 1 a and which is used during data processing; a graphic processor 1f for creating display images from graphic data; and a sound processor 1 g for creating sound signals from sound data.

Furthermore, a VRAM 1 s is connected to the graphic processor 1f, and it is used when creating an image signal. A sound RAM 1t is connected to the sound processor 1g and is used when creating a sound signal. The output section of the sound processor 1 g is connected to an audio/video connector 1 r.

In broad terms, the aforementioned bus controller 1d is comprised of a peripheral interface 1d, a graphic processor controller 1u, an internal bus controller 1v, and an external bus controller 1w.

A bus controller 1d is connected to the CPU 1a via a bus 11a, and the CPU 1a controls the bus controller 1 d. A RAM 1e is also connected to the bus 11 a. An expansion serial connector 1q is connected directly to the aforementioned CPU 1a, via the bus 11 b, and this CPU 1 a is able to control and use serial type auxiliary devices connected to the expansion serial connector 1q, by exchanging signals with the auxiliary devices on the basis of a prescribed data transmission method. More specifically, serial type auxiliary devices can be connected to the game device 1 In such a manner that the signals for such things as programs, video images, sounds, commands, and the like, can be exchanged between the auxiliary devices and the game device 1.

The graphic processor controller 1 u is able to control the graphic processor 1f under the control of the CPU 1a. The internal bus controller 1v is connected respectively via the bus 11 c to the CD-ROM device 1c, ROM 1b and sound processor 1g, and the internal bus controller 1v is able to control the operations of the CD-ROM device 1c, the ROM 1 b and the sound processor 1 g, under the control of the CPU 1 a.

The output section of the external bus controller 1w is connected via the bus 11 d to an expansion connector 11m, in such a manner that the external bus controller 1w is able to control the use of parallel type auxiliary devices connected to the expansion connector 1 m, by exchanging signals with the auxiliary devices, under the control of the CPU 1 a. More specifically, parallel type auxiliary devices can be connected to the game device 1 in such a manner that the signals for such things as programs, video images, sounds, commands, and the like, can be exchanged between the auxiliary devices and the game device 1.

Each of peripherals 2 and 2 are connected to a peripheral connector 11. A television (TV) monitor 4 is connected to an audiolvideo connector 1 r. A cable modem 6 is connected to the expansion connector 1 m as a parallel type auxiliary device, and the game device is connected to the network 3 via this cable modem 6. Examples of a parallel type auxiliary device that is connected to the expansion connector 1 m include, in addition to the cable modem 6, a terminal adapter, a satellite data receiver, a portable terminal device (PDA), a cellular telephone, a data recording device, or another type of serial or parallel auxiliary device. Examples of the serial type auxiliary device connected to the expansion serial connector 1r (which may conform to USB standards or IEEE 1394 standards) include a modem, cellular telephone, PHS, data recording device, communications cable, and other serial auxiliary devices.

Fig. 2 shows the detailed composition of the game master station. The game master station 7 comprises: a communications device 71 which communicates with the respective game devices via the communications network 3 and the particular

Internet provider 5; an authentication server 72, which is a general server connected to the communications device 71 for controlling sign-ups and connection requests from the game devices 1; and a special server (subsidiary server) 73, provided at a level below the authentication server 72, which carries out processing for executing a simulated experience in the game devices 1 as if the player were playing a game relating to a network RPG as described above, or a Mahjong game, or the like, with other players. Here, the subsidiary server 73 comprises a first server 73a, a second server 73b, and a plurality of game servers, The game servers are classified according to the type of game (or type of game program), and each game server has a processing device (CPU) 74a, b, and so forth for executing a particular communications-based competitive game in the respective game device terminals.

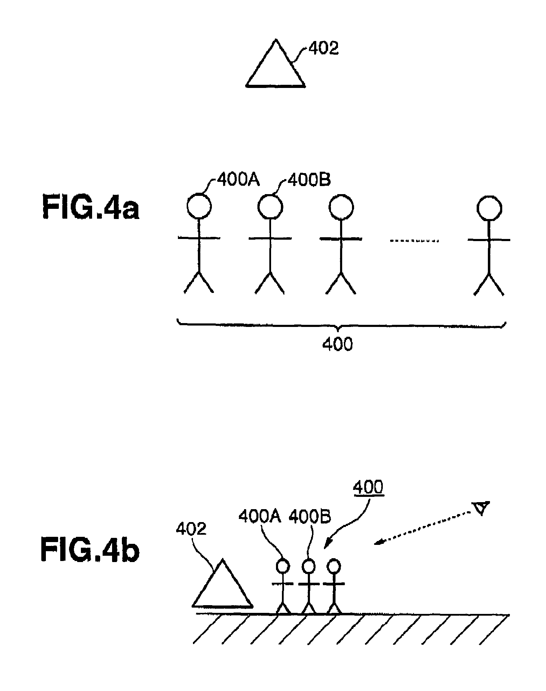

Fig. 4a shows a game screen displayed on the monitor of the respective game terminals, which shows a situation in which a plurality of game characters 400 have formed a team, and a game scenario (based on common rules) for defeating an enemy character 402 displayed on the screen, for example, is being pursued. The respective characters are controlled by the corresponding game terminal devices. Of the plurality of game characters, character 400A is a character which can be controlled by the player in question, and 400B is a character which has been inherited from a player who has departed. The remaining game characters are characters which are controlled by the other active game terminal devices connected to the network game system. Fig. 4b is a schematic drawing of a case where the game characters 400 and the enemy character 402 are situated on a ground surface in a virtual space, and where this situation is observed from a virtual viewpoint.

The CPU 1 a of the game terminal device receives inputs required for operating the character under the control of that device, from an input device, and it creates control information for the game character on the basis of the game program and controls the character on the basis of this aontrol information, as well as sending the control information to the corresponding server in real time, in such a manner that the CPU of the server transmits this information respectively to the game terminal devices corresponding to the other game characters forming the same team. Before sending the information, the processing device of the server moves the game character on the basis of the control signal, judges contact with walls, modifies the parameters of the players' characters and the enemy character, and the like, and sends the results to the respective game terminal devices. Consequently, the same screen is displayed on the monitors of all of the game terminal devices, and each of the game terminal devices is able to control the corresponding characters, respectively.

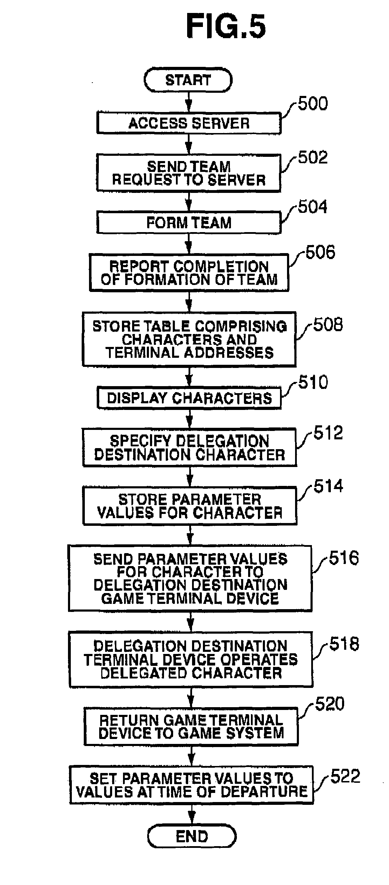

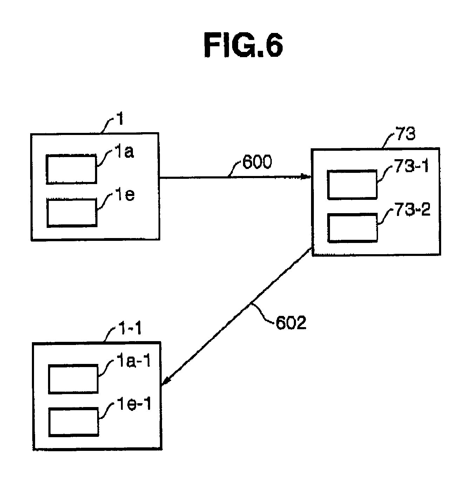

The server intervenes in the exchange of data between the game terminal devices, and it also controls common matters on the basis of the game program. Examples of such matters include editing of existing teams, controlling of enemy characters, and the like. For the server, apart from using a dedicated device, as In the block diagram described above, it is also possible to use a free game device, or the processing unit of a terminal device engaged in game play, to which the players do not have access. Next, the operation of the game system described above will be described with reference to the flowchart shown in Fig. 5. The description of Fig. 5 also uses a block diagram (Fig. 6) which illustrates the relationship between a game terminal device (reference numeral 1 in Fig. 2) and a game application server (reference numeral 73 in the same).

If a game terminal device makes an access request to the authentication server, the game application server (hereinafter, simply called "server") performs authentication to see whether or not connection to the network game system is permitted (500).

The CPU 1a of the game terminal device 1 authenticated for connection to the network game system sends a request for creating a team on the game server, to the processing device (CPU) 73-1 of the server 73 (502). The server 73 judges whether or not access has been made by the number of terminals required to create a team, and when the required number has been reached, a team Is created (504).

The server 73 then sets the network addresses of the plurality of game terminals forming the same team, in a prescribed memory region 73-2 of the server, in the form of a table, or the like. A report indicating that creation of the team has been completed is sent to each of the terminal devices 1. Data for displaying a plurality of game characters is stored in the memory 1e of each terminal device.

Each of the terminal devices creates a table indicating the addresses of the game terminal devices having operating authority for the characters operated by that terminal device as well as other characters, and it establishes and stores this table in the work region 1e of the memory (508).

Address information relating to the game terminal devices is appended to the data sent from the server 73, and the processing device 1a of the game terminal device judges the correspondence between data having particular address information and the game characters, on the basis of the table, and displays the character that should be operated by the particular game terminal, on the monitor, together with the device's own character (510).

The CPU 73-1 of the server performs calculations for required image processing on the basis of the control information sent from any of the terminal devices belonging to the team, and it sends control result information to the addresses of the other game terminals belonging to the team. In other words, the game terminals belonging to the same team are mutually associated by means of their addresses on the network, and data is exchanged between these game terminals, in such a manner that the plurality of characters in a team act simultaneously, and a common game screen, or game screens having different viewpoint positions within a common virtual three-dimensional space, are displayed on the monitors of the terminal devices belonging to the same team.

The playing of the game by the same team is implemented according to common rules, and these rules are decided by the game program. The course of the game develops in line with a scenario decided by the game program. In a fight scene, a plurality of game characters operated by the respective game terminals fight jointly against an enemy character operated by the CPU 73-1 of the server. The parameters relating to the game characters change depending on how successfully they are operated during a fight. The parameters referred to here relate to the abilities of the game characters, and they are stored in a particular area of the memory 1a of each game terminal device and/or the memory 73-2 of the server. For example, parameters Indicating the character's life count value, the character's physical strength, the number of weapons carried by the character and their characteristics, etc., are defined or established appropriately by the game program. Information (voice, text, images, or the like) based on a chat service can be exchanged between the game terminal devices belonging to the same team, and hence the players can enjoy the sensation of team play by checking the situation with each other, by voice, or the like. This chat system may adopt the system described in Japanese Patent Application Publication No. 2003-304350, for example. The processing described above continues until the game ends.

In the system according to an embodiment of the present invention, if any one of the players belonging to a team wishes to depart from the game during play, then that player can ask the other team members if he or she can depart, by using this chat system. In this case, the player wishing to depart is able to decide to delegate the operating authority for his or her own character to another member of the team, after his or her departure. The player delegates the rights for the character that he or she is operating, to the CPU 1 a-1 of the game terminal device (1-1) having the operating authority for another character, by designating that other character.

When the game terminal device operated by the player wishing to depart from the game specifies a character to which to delegate the operating authority of its own character (512), this Information 600 is sent to the server. In other words, a terminal device 1 which wishes to depart from the network game system reports a flag indicating a delegation request, and a network address, to the server 73. Thereupon, the current parameter values for the delegated character (own character) are stored in the work region of the memory of the game terminal device 1 which is originating the delegation of rights (514). This information may also be stored in the memory 73-2 of the server.

The server comprises a table which specifies network addresses for the plurality of game terminal devices belonging to the same team, and it is able to establish special flags for the game terminal seeking to depart, and for the game terminal device to which operating authority for the character have been delegated. Accordingly, the server and the respective game terminal devices are able to distinguish the delegation source game terminal device which has originated delegation of operating authority for a character, and the delegation destination game terminal device to which those rights have been delegated.

The table also specifies character IDs and the network addresses of the game terminal devices which have the authority to operate those characters. The departure request information 600 from a game terminal device seeking to depart from the game includes the character to which the operating authority for the character of that device is to be delegated (in other words, the delegation destination game terminal device). Therefore, the server is able to identify the delegation destination game terminal device from this departure request.

The server confirms the network address of the game terminal device having the operating authority for the character, and as necessary, reports the delegation of operating authority to the delegation destination terminal device, as well as reads out information 602 including the parameters values for the delegated character from the memory 1 e of the delegation source game terminal device 1-1, and sends this information to the delegation destination terminal device (516).

The CPU 1a-1 of the game terminal device receiving this delegation of authority thus comes to possess the operating authority for the character relating to the temporary departure, which Is displayed on the screen, as well as that for the device's own character, in accordance with the input information. Furthermore, the parameter values of the delegated character are set and stored in the work region 1e-1 of the memory. The processing device 1 a-1 of the game terminal device receiving delegation of a character is able to operate the delegated character in accordance with these parameter values, as well as to operate the device's own character in the same manner as previously (518).

With the objective of reducing the operational load on the player at the delegation destination terminal device 1-1, it is possible to at least partially automate (including fully automate) the operation of the delegated character by synchronizing it with the operation of the player's own character. Of course, the game terminal device is also able to control the delegated character individually. An example may be a situation in which when the player's own character is launching an attack on an enemy character, the delegated character may automatically defend against an attack from the enemy. As well, a case may be that when the delegated character attacks the enemy character, the delegated character is controlled individually on the basis of the input of the delegation destination terminal device.

In the delegation destination game terminal device, an image processing results screen is displayed on the basis of the operations applied to the delegated character via the operational input device, For example, if the delegated character receives an attack, then an effect showing, that character falling over, or the like, is displayed on the monitor. In this case also, desirably, parameters such as the remaining life value of the delegated character are modified in accordance with the operations from the delegation destination game terminal device. This also applies in cases where, for instance, the delegated character has eliminated an enemy character, in which case the parameter values of the character are usually increased. The current values of the modified parameters of the character can be updated continuously in a prescribed region of the memory of the server. The parameter values of the character whose operating authority have been delegated may be left unchanged, but in such case, the level of difficulty of the game will be caused to be reduced.

If a player seeks to return to the network game system via the delegation source terminal device 1, after a prescribed time period has elapsed (520), then the player makes contact with the delegation destination terminal device, via the server 73, by means of a voice chat system, text chat system, video chat system, or other means of contact. Although it is permissible to simply display the progress of the current game In a real-time, live fashion, on the display screen of the delegation source terminal device, this does not mean that the delegation source terminal device has returned to the network game system.

If the delegation source terminal device 1 reports a return command 604 to the server, then the server sends a command for removing the operating authority for the delegated character, to the destination terminal device 1-1. Upon receiving this command, the CPU 1 a-1 of the delegation destination terminal device releases the operating authority of the delegated character and reports this fact to the server, as a confirmation signal.

When a return command has been input at the delegation source terminal device 1, the CPU 1 a reads out the changeable parameter values at the time of the player's departure, from the memory 1a, and/or the work region of the memory 73-2 of the server, and it sets these parameter values by overwriting in the parameter storage region for the returned character in the memory 1 a of the delegation source terminal device.

Consequently, the CPU 1 a of the delegation source terminal device restarts the game from a state where the parameter values are the same as those at the time of departure (although some increase or decrease may be made within a permitted range). The parameter values of the delegated character may be changed or updated by processing carried out in the delegation destination game terminal device, but upon returning, these values are reset to the original values, in such a manner that the parameter values at the time of departure are set in the delegation source game terminal device (522). It is also possible for the parameter values for the delegated character to remain unchanged from the time of delegation, without being updated at the delegation destination game terminal device.

If the delegation source terminal device performs a normal operational Input in this state, then operation of the returned character restarts, in accordance with this input information, and subsequently, this operation can be continued.

An example of a storage table (#1) established in the memory region of the server is shown below. This storage table shows the control state of the characters of the respective game terminal devices. The processing device of the respective game terminal devices can identify the control state of the character by referring to this storage table. The table is updated occasionally in the server, and the server carries out necessary image processing by referring to the ability values stored in the table (physical strength, magical powers, attacking strength, defensive strength), and the coordinate values (X, Y), and sends the results to the game terminal device.

**#1**

| User ID | Controller | Physical strength | Magical powers | Attacking Strength | Defensive Strength | Coordi nate X | Coordi nate Y | f |
|---|---|---|---|---|---|---|---|---|
| 1 | 1 | 100 | 100 | 100 | 100 | 100 | 100 | 0 |
| 2 | 2 | 90 | 80 | 70 | 60 | 101 | 101 | 0 |
| 3 | 1 | 80 | 90 | 100 | 80 | 100 | 101 | 1 |
| 4 | 2 | 70 | 80 | 90 | 70 | 101 | 100 | 1 |

This table has the following meaning. For example, the table indicates a state where user 1 is controlling the character of user 3, and user 2 is controlling the character of user 4. The storage table includes a flag region f relating to the delegation and return of operating authority. If "0" is set in f, then this indicates that the operating authority of the character have not been delegated, and if "1" is set in f, then this indicates that the operating authority of the character have been transferred to another user. When a transfer destination for the operating authority of a character is determined, then f is changed from "0" to "1", and when a return request is accepted, it is changed from "1" to "0".

#2 below shows the storage region of the ability values as would be In the storage table when there has been a transfer of the operating authority of a character (f has changed from "0" to "1").

**#2**

| User ID | Controller | Physical strength | Magical Powers | Attacking strength | Defensive strength | f |
|---|---|---|---|---|---|---|
| 1 | 1 | - | - | - | - | 0 |
| 2 | 2 | - | - | - | - | 0 |
| 3 | 1 | 70 | 80 | 90 | 70 | 0 -> 1 (1 -> 0) |
| 4 | 2 | 6 | 70 | 80 | 60 | 0 -> 1 (1 -> 0) |

This table stores the ability values of the characters at the time that the operating authority of the characters 3 and 4 are transferred respectively to other users. Furthermore, if the operating authority Is returned to the original device, in other words, if f is set from "1" to "0", then the ability values of the characters 3 and 4 in table #1 are set to assume the storage values in table #2.

In this way, even if a player wishes to depart temporarily from the network game system, since the parameters of the player's character do not change substantially from their values at the time of the player's departure, the player would be motivated to think, "Let me continue playing the game myself, rather than leaving the game at this point." On the other hand, the player would be motivated to think, "Let me return swiftly to the game, since the ability values of the character will not have declined if I return to the game quickly." Consequently, it is possible to offer a novel network game system In which temporary departure of a player Is permitted during the network team game, while at the same time the player is not able to depart without due consideration and the departed player is not dissuaded from returning to the network game system. Moreover, as described previously, beneficial effects are obtained in that the other players playing the game are able to continue the game without suffering disadvantage, and without a decline in the overall capabilities of the team.

Moreover, when delegating operating authority for a character, a player is able to confirm the wishes of the other players, by using means of contact such as a chat system, and therefore, it is possible to prevent the team play from being interrupted, even temporarily.

In the system described above, no restrictions are placed on the players' departure from and return to the game, but it is also possible to require the confirmation of the delegation destination game terminal device for departure and/or return. In this case, if all of the game terminals in the team refuse to accept delegation of the operating authority of the character, then the operating authority may be delegated to the CPU of the server.

## Claims

1. A network game system comprising:
a plurality of game devices connected to a network and configured to be able to exchange data with each other via a server, the plurality of game devices forming a team of respective characters being controlled in accordance with operating information input by players via respective input devices; and
a game program for implementing a game under common rules is executed conjointly by said plurality of game devices and the server,
wherein each of the game devices and the server comprise a processing device for executing all or a portion of said game program and a memory for storing data required for executing the game program;
wherein the game devices each comprise an input device operated by the player for inputting operating data for operating said character to said central processing device in such a manner that the central processing device having received this input is able to operate said character in accordance with said operating data; and
wherein, on the basis of said game program, a processing device (A) of each of said respective game devices and a processing device (B) of said server implement:
means whereby A requests formation of said team to B;
means whereby B forms said team in response to the request by A;
means whereby B supplies a report indicating membership of the same team to each A forming the same team;
means whereby departure from the team of an A in the team can be declared;
means whereby the A or B seeking to depart from the team copies variable parameter values relating to the departing character under the control of the A at the time of departure and stores said values in a memory of said game terminal or of
said server;
means whereby B transfers operating authority for the character under the control of the A seeking to depart from the team, to another A belonging to said team;
means whereby the A which has received a transfer of the operating authority is able to operate the character that has been transferred, as well as the character under its own control, by means of said operating device;
means whereby the A which has departed outputs a request signal for return to said team, to said B, by means of an input to said operating device;
means whereby the B having received this input establishes the termination of the operating authority of the character of the departed A, for the other A to which said operating authority are transferred; and
means whereby, when the departed A returns to said team, the operating authority
for said character are returned to that A, and the parameters copied at the time of departure are read out from the memory of said game terminal or of said server and
these parameter values are established as parameter values for the character at the time of return.

2. A network game system in which a plurality of game terminal devices access a server, said system being a system which permits said game terminal devices to temporarily depart from and subsequently return to the processing of a network game, comprising: when a game terminal device departs, a set of variable parameter values relating to a character operated by a processing unit of that game terminal device are stored in a memory of said game terminal or said server; and when the departed game terminal returns to the network game system, the variable parameter values stored in said memory being established for the character, as initial values after return.

3. The system according to claim 1 or 2, wherein a chat system is provided between said plurality of game terminals.

4. The system according to any one of claims 1 to 3, wherein the game terminal device delegated with the operating authority of said character comprises means for enabling the control of the delegated character to be carried out at least partially automatically, by synchronizing said control with the control or operation of the character which is originally operated by that game terminal device.

5. A program for causing the processing device of said game terminal device or server to execute the respective means in the system according to any one of claims 1 to 4.

6. A storage medium on which the program according to claim 5 is stored.

7. A server connected to a network to which a plurality of game terminal devices are connected, having processing means and required storage means, wherein a program which enables an electronic game play to be implemented conjointly by said game terminal devices is stored in the storage means;
and said processing means is composed in such a manner that it permits said game terminal devices to temporarily depart from and subsequently return to the processing of a network game; and, when a game terminal device departs, variable parameter values relating to a character operated by a processing unit of that game terminal device are stored in a memory of said game terminal and/or said server, and when the departed game terminal returns to the network game system, the variable parameter values stored in said memory are established for the character, as initial values after return.

8. A game terminal device, which can be connected to a network game system via a server, and which can temporarily depart from and subsequently return to the processing of a network game, the game terminal device comprising: processing means and required storage means,
wherein a program which enables an electronic game play to be implemented conjointly with other game terminal devices connected to said network game system is stored in the storage means; and
on the basis of this program, said processing means stores variable parameter values for the character operated by said processing means in said storage means and/or said server when the game terminal device departs from said network game system, and said processing means establishes said stored variable parameter values for the character as initial values after return when the game terminal device returns to the network game system,

9. A network game system in which a plurality of game terminal devices access a server, said system being a system which permits said game terminal devices to temporarily depart from and subsequently return to the processing of a network game and permits said processing to continue while a departed game terminal device is absent, comprising: means arranged so that when a game terminal device departs, a set of variable parameter values relating to a character operated by a processing unit of that game terminal device are stored in a memory of said game terminal or said server; and means arranged so that when the departed game terminal returns to the network game system, the variable parameter values stored in said memory are established for the character, as initial values after return.
